# EUROPEAN PATENT APPLICATION

(11) **EP 4 378 891 A1**
(43) Date of publication of application: **05.06.2024**
(21) Application number: 23176891.2
(22) Date of filing: 02.06.2023
(51) Int. Cl.: C01F 5/00, A23L 27/00, A23L 27/40

(54) **A METHOD FOR PRODUCING CARNALLITE AND A CARNALLITE PRODUCT**

(30) Priority: 29.11.2022 EP 22210061
(71) Applicant: Smart Salt Oy, 00140 Helsinki (FI)
(72) Inventor: MÄKI, Juhani, deceased (FI); HUOPANIEMI, Tero, 00140 Helsinki (FI)
(74) Representative: Berggren Oy

(57) **Abstract**

The present disclosure provides an improved method to produce food grade pure carnallite of small crystal-size to be used in blends with the alkaline chlorides to form low-sodium mineral salt compositions of pure chloride basis with improved stability against humidity, wherein the ionic ratios can be adjusted according to the present recommendations. The present salt compositions can be designed and used for the daily consumption for household use and to compensate the mineral shortcomings of the industrial foods. The present disclosure provides also the use of the carnallite blends as a substitute for the phosphates used extensively in the meat industry to bind the structural water in the refined meat products, such as sausages and ham as well as in the bakery products.

## Description

### Field of the application

The present application relates to a method for producing carnallite and carnallite products. More particularly, the present application relates to a method for preparing carnallite, a naturally found double-salt, substantially free of harmful by-products to be used as a component in blends with alkalic chlorides for edible applications including the feeding of live-stock. Moreover, the carnallite is produced in small crystal-size suitable for blends with the other edible chlorides.

### Background

In most countries, the food industry has been under pressure to reduce the use of salt i.e., sodium chloride for health reasons. Excessive individual salt consumption has been related to elevated blood pressure, which in turn has connections with several health issues including abnormal cholesterol levels in blood, diabetes, and rheumatic symptoms, for example. It is estimated that almost globally, populations are using more sodium chloride than needed for the maintenance of the electrolytic balance in body fluids. It has been estimated that more than 70% of dietary salt consumption is provided by the processed foods. In addition to the physiological reasons, salt is added to improve the shelf-life and the texture of many foodstuffs as well as for the reason that salt is the most economic spice. The World Health Organization (WHO) is recommending an individual intake of less than 2000 mg of sodium per day, equal to about 5 g of salt, *i.e.,* sodium chloride.

Several products are available commercially for the reduction of the daily sodium intake in food products. A common commercial practice is to reduce sodium content by substituting sodium chloride for potassium chloride. Thus, mechanical blends of NaCl and KCI up to ratios of 50/50% and even 34/66% has been presented. These mixtures provide their own limitations in common daily use. It is well known that individuals with renal failure may be severely affected of excessive amounts of free potassium chloride. Particularly in a case that the diet contains sodium salts of organic acids, like sodium acetate and sodium citrate, potassium may be absorbed in the form of organic potassium salts and as a result, nervous dysfunctions, particularly cardiac dysfunctions may be expected.

Another class of salts with reduced sodium content are the s.c. mineral salts, which contain besides sodium chloride also potassium chloride also a source for magnesium. A common magnesium source is the magnesium sulphate in a stable hepta hydrate form *i.e*., MgSO₄·7H₂O. The material is physiologically almost harmless but has a disagreeable bitter taste. In addition, the number of the bound crystal water molecules is depending on the ambient temperature. Severe caking will be found in a case that packed salt blends are exposed to warm conditions, even to temperatures over 30°C. Some other mineral salts in the market contain magnesium compounds of carbohydrate acids or amino acids, such as magnesium gluconate, magnesium glycinate or the complex compounds of magnesium chloride and amino acids, which all have adverse effects on the taste of the salt blends thereof. A separate class of food salts are the seasoning salts, which contain as the additives mainly spices, usually without other salt additives. A common seasoning additive is the sodium glutamate having a pleasant meaty taste.

On the physiological consideration chlorides of sodium, potassium and magnesium are the most essential ionic compounds in the body fluids, while calcium has a lesser role on cellular level. Of the mentioned ions, potassium and magnesium are intracellular ions while sodium and calcium are extracellular ions found mostly in the interstitial fluids outside the cells. As other anions than chlorides are in minute role on the cellular level, it will be clear, that the physiological salt supplementation should also be on a pure chloride basis to avoid the possible cumulative side effects of *e.g* the organic physiologically unusual anions. This principle has not been well understood among the manufacturers of salt supplements. However, some approaches have been presented in the patent literature to utilize the global sources of magnesium chloride and to overcome its affinity towards atmospheric moisture.

Magnesium chloride is found in the nature only combined with potassium chloride into a double-salt form as a mineral carnallite, crystallized with six molecules of crystal water of the formula MgCl₂·KCl·6H₂O. The material is highly hygroscopic and contains as common impurities lead, bromides, and arsenates, which are complicated to eliminate to meet the allowed levels for edible purposes. When separated from the carnallite, magnesium chloride has still highly hygroscopic properties, which makes its use impossible in salt blends. For these reasons the focus has been on the practices to develop pure carnallite-type structures with improved stability in humid conditions, which property is mostly necessary for the food salts.

Magnesium chloride forms with ammonium chloride a carnallite-type double salt having the formula MgCl₂·NH₄Cl·6H₂O. The product, ammonium carnallite, has an improved stability against atmospheric humidity and a sharp salty taste and is thus suitable for the use as a component in edible salt blends. The product is precipitated easily in a pure form by cooling a concentrated solution of the components (WO 200044245 A1). The product had excellent technical and preservative properties for the foodstuffs, particularly for the raw salted fish. However, the taste of the product was somewhat different from the ordinary salt, which seemed to prevent the extended sales of the product.

Another approach describes a method of modifying the structure of carnallite by substituting potassium only partially for the ammonium ions (US 6,781,169 B1). The formed mixed carnallites were not hygroscopic even in the molar ratios of ammonium and potassium ions of 1:3. The taste and the other properties of the blends thereof were excellent when containing up to 15% of the new mixed carnallite. The blends are still in limited use in USA and in some European countries.

In both described methods, carnallite type salts were separated from the concentrated mother liquor by filtration, dried and used further as a component in the blends of alkaline chlorides to meet the wanted ionic composition. The filtrates originated from the separation were recycled to minimize the material losses.

A publication WO 2014/087056 A1 describes a method to produce the wanted triple-salt blends by adding into a concentrated and cooled carnallite suspension potassium chloride and sodium chloride to reach the wanted ionic composition and to adsorb most of the water to the added dry salts. The formed moist salt mixture was then dried carefully in low temperatures to avoid the partial solution of the added chlorides and to avoid an excessive caking. The described process is the first effort to produce carnallite containing blends of chlorides in a one-step procedure. The process is exceptional for the reason that no raw materials were lost or recycled in the process.

The described method is promising but needs further improvements. The added dry salts certainly adsorb most of the remaining free water, but more free water is released when the double salt formation is proceeding. The formation of the carnallite seems to need either more prolonged treatment or a gradual increase of the temperature to disturb the surrounding water cloud around the cations and to bring the cations into mutual contact. The released free water together with the positive heat of crystallization will easily lead to caking of the blends, which will then require additional work to homogenize the products into freely flowing form.

The shortcomings of the procedure may be described as follows: 1. The temperature of the crystallizing carnallite is adequate to prevent the exhaustion of small amounts of hydrogen chloride but is too low to effectively promote the double-salt formation. 2. In a careful evaporation, carnallite solidifies as glassy transparent lumps and not as small-size crystals. 3. The obtained solid material still contains free water, which should be eliminated, however, preferably not by raising the process temperature. 4. As the main shortcoming seems to be the still high water-content of the carnallite suspension, an improved method will be needed to produce carnallite in more concentrated conditions, preferably without any residual water.

Natural carnallite, MgCl₂·KCl₄Cl·6H₂O.has been an interesting material as a component of food salts despite the previously mentioned, strictly regulated co-precipitated impurities (Br, Pb and As). The natural carnallite is used mainly for the animal feed purposes. A patent concerning the use of the Dead Sea salt reservoir is presented for use as a food salt (US 2012/0308487 A1). In the description, crude Dead Sea water having salt concentration of about 25% is concentrated further to precipitate the alkalic chlorides and unwanted solid impurities. The filtered solution is evaporated further and the precipitated carnallite is collected as a moist glassy mass and washed shortly two times with minute amounts of water. After a repeated recrystallization procedure, the washed filter-cake is dried and used for edible purposes. The analytic values of the obtained carnallite were as follows: less than 2 mg/kg of lead (Pb), less than 10 mg/kg of heavy metals and less than 0.5% of bromine. The value for arsenic (As) was lacking. The obtained carnallite will be blended with sodium chloride and is purposed mainly for industrial use. The blending will also reduce the analytical values of the unwanted impurities.

As a conclusion, Dead Sea salt appears to need more purification steps to match the present strict quality and safety demands for use in edible purposes. In addition, the economy of the process will also suffer from the multiple purifications of the carnallite.

### The global salt sources

To understand the origin of the global salt resources, a short survey to the global pre-history will be useful.

All of the global salt sources are originated from the ancient ocean, which covered most of the planet. The volcanic activities and poor gaseous atmosphere may have resulted to the partial escape of the oceanic water and the dissolved salts started to crystallize out of the concentrating seawater, sodium chloride in the first phase and carnallite in the second phase. Thus, hundreds of meters thick salt strata were formed in many parts of the world, mostly on the northern hemisphere. Sodium chloride is found in the lower parts of the strata and carnallite in the surface parts, owing to the fact that carnallite is crystallized only in highly concentrated solutions.

In the tectonic processes of the earth, particularly during the orogenic periods, parts of the salt strata were migrated into highlands, containing extremely pure NaCl *i.e.,* rock salt. On the sediment areas, the salt strata were covered during long periods with hundred meters thick soil, part of which is now of the organic origin. In the surface parts of the salt strata, carnallite has been exposed to the atmospheric humidity and is thus never found in dry form.

In addition to the subterranean carnallite sources, salt lakes are found all over the world, mostly on the northern hemisphere. Typically, salt lakes have no outlet to the ocean. Perhaps the most commonly known examples of concentrated salt lakes, i.e. brine lakes are the Dead Sea in Israel and Great Salt Lake in Utah. When compared to the subterranean sources, the brine lake carnallite is not as pure as subterranean material. This property is a result from the fact that the surface sources are not crystallized straight from the ancient ocean but are rather leached out of the surrounding terrain. In addition, the atmospheric impurities have effect on the purity of the water. The Dead Sea, for example, contains water-soluble impurities such as compounds of lead, arsenic and bromine as well as bituminous materials. Recrystallization may be in some cases adequate to purify the salt, but chemical methods are often needed, which include hydrogen peroxide treatment, in order to convert bromides into volatile bromine and to precipitate some of the possible minor heavy metals. Carnallite is found around the shores of Dead Sea in the form of transparent lumps and boulders, which seem to stay stable in the local arid climate.

Carnallite is also a source for the production of pure potassium chloride, which is separated from the carnallite by adding carnallite into a minute amount of water. Potassium chloride will be precipitated in pure crystalline form and is separated from the mother liquor by filtration. The mother liquor is used partly for the production of pure magnesium chloride hydrate with formula MgCl₂·6H₂O. Most of the mother liquor will be converted into magnesium hydroxide and will be used besides natural bauxite in the electrolytic production of metallic magnesium.

### Summary of the invention

In the present investigation, merely purified components were used as the components of carnallite to overcome the health concerns and taste problems connected to the natural carnallite with the minor co-precipitated impurities. It is also well-known that the crystallization will be facilitated when no interfering by-products are present.

A particular problem of the prior art techniques has been the poor crystallization of carnallite to form small-size crystals in low and moderate temperatures. In laboratory-scale procedures carnallite is usually solidified as transparent lumps of the same outlook as found on the shores of Dead Sea. The fresh carnallite lumps still contain water, which leads to problems when homogenizing the material. Carnallite will crystallize into medium-size crystals when evaporated carefully at higher temperatures like 70°C. However, during the process the temperature will easily rise to 100°C and over due to the positive heat of crystallization of carnallite. As a result, hydrogen chloride may be escaped and the properties of the material, including the taste, will be distorted due to the formation of basic magnesium hydroxy chloride MgOHCl.

When the crystallization was investigated in the presence of different solid impurities, it was surprisingly found that certain water-insoluble fine-sized particles with OH-functionality have a promoting effect on the small-size crystallization of carnallite. Even catalytic amounts of the materials seemed to have the same favourable effect on the nucleation. In an ordinary case, an equivalent amount of dry potassium chloride and the nucleation enhancer(s) are added into a concentrated solution of magnesium chloride and the dispersion will be further concentrated under agitation in mild conditions. The carnallite crystals were readily precipitated as a separate phase and the crystallization was continued as long as free potassium chloride was available. The found phenomenon is a rare example of surface catalysis, which is more common in organic chemistry, particularly in polymerizing reactions.

The reason for the ionic attraction is the common tendency in the chemistry to minimize the total energy of the system. The formed ion pair in this particular example will be on a lower energy level than the two separate ions. Thus, exothermic heat of crystallization will be expected. As a result of the parity of the potassium and magnesium ions, more free water will be released, and the water will be readily evaporated to obtain a substantially dry mass of carnallite. The moist crystalline carnallite can be directly blended with dry alkaline chlorides in desired ratios to absorb the residual moisture and will be finally dried for example in a rotating drum with or without reduced pressure. The drying method enables the coating of the moisture-sensitive carnallite crystals with mixed alkaline chlorides and, as a result, the stability of the product in humid conditions will be improved.

The present invention provides a method to produce substantially pure carnallite of small crystal size. The crystal size of the carnallite produced according to the method of the present invention is comparable with the crystal size of alkalic chloride particles. Typically the crystal size is in the range of 0.3 to 0.8 mm. In one embodiment, the crystal size is in the range of 0.3 to 0.5 mm. The produced carnallite is substantially pure comprising at least 99.5% by dry weight of carnallite. Typically it comprises carnallite in the range of 99.5 - 99.9% by dry weight.

As described before, the method comprises the evaporation of a dispersion of pure potassium chloride in concentrated magnesium chloride solution in the presence of catalytic amount(s) of at least one OH-functional powder-form material into substantial dryness, *i.e.,* the evaporated residue contains no more a separate water phase. The ratio of the salt components in the former description is equivalent or near-equivalent in favour of potassium chloride to eliminate the presence of free magnesium chloride hydrate in the evaporated residue.

Disclosed is an improved method to produce food grade carnallite in small crystal size to be used in blends with the alkaline chlorides to form low-sodium mineral salt compositions of pure chloride basis, wherein the ionic ratios can be adjusted according to the present recommendations. The present salt compositions can be designed and used for the daily domestic purposes as salt substitutes or supplements and to compensate the mineral shortcomings and imbalances of industrial food products. The present disclosure also provides the use of the food grade salt blends as a substitute for the phosphates used extensively in the meat industry to bind the structural water in refined meat products such as sausages and ham.

The present investigation and the findings therein will essentially improve the ideas and methods presented in the prior art, such as the patent publication WO 2014/087056 A1, for example.

The present disclosure provides a method of producing pure carnallite of food-grade, the method comprising gradually evaporating a mixture of equivalent or over-equivalent amount of potassium chloride dispersed into an equivalent amount of concentrated magnesium chloride solution in the presence of at least one nucleation enhancer, warming and agitating the mixture to convert the materials into a dispersion of carnallite, evaporating the residual water and optionally drying the moist carnallite to obtain the food-grade carnallite.

In addition, the present disclosure provides carnallite of food grade, which has carnallite content in the range of 99.5 - 99.9% by dry weight and a crystal size in the range of 0.3 - 0.8 mm.

The present disclosure provides also a food grade salt product as disclosed herein.

The present disclosure provides use of the food grade salt product as a substitute for the phosphates used extensively in the meat industry.

The main embodiments are characterized in the independent claims. Various embodiments are disclosed in the dependent claims. The embodiments and examples recited in the claims and the specification are mutually freely combinable unless otherwise explicitly stated.

### Detailed description of the invention

### The raw materials

As stated before, only purified components are used as the components of carnallite in the described process. The components, KCl, and magnesium chloride hydrate, MgCl₂·6H₂O, are separated from the crude subterranean carnallite by method described previously, recrystallized and analysed to meet the local regulatory requirements for purity. Of the common impurities, bromine will be readily eliminated. Lead and arsenic are present in carnallite as hydrated oxyanions, plumbates and arsenates and need specific steps to be removed.

### The proportions of the crystallization system

The present disclosure provides a method of producing pure food grade carnallite of small crystal size. The crystal size of the carnallite produced according to the method of the present invention is comparable with the crystal size of alkalic chloride particles. Typically the crystal size is in the range of 0.3 to 0.8 mm. In one embodiment, the crystal size is in the range of 0.3 to 0.5 mm. To avoid the hygroscopic properties of residual free magnesium chloride in the produced carnallite, the components shall be present in the mother liquor in equivalent proportions and even excess of KCl is suggested to eliminate totally the free MgCl₂. The molar ratio of potassium chloride and magnesium chloride is typically in the range of 1:1 - 1.3:1 or more, such as in the range of 1:1 - 1.4:1. The produced carnallite is substantially pure comprising least 99.5% by dry weight of carnallite. Typically it comprises carnallite in the range of 99.5-99.9% by dry weight.

It is also remarkable, that the commercially available carnallites are often thermally treated and contain thus less than six crystal-water molecules to improve the stability in atmospheric humidity. In a convenient procedure, solid potassium chloride is added into a highly concentrated magnesium chloride solution together with the nucleation enhancer(s) and the mixture is warmed under gentle agitation to concentrate further the solution. As noticed, the complete dissolution of the KCl is not needed and the crystallization is proceeding during the slow agitation. It is well-known that magnesium chloride is capable of dissolving into minute amounts of water. The available free water of the solution will be saturated with potassium chloride to form a saturated dispersion of potassium chloride. The remaining solid KCl will be dissolved upon the formation of carnallite, and the salt suspension will turn gradually into a dense sediment of carnallite facilitated by the nucleation enhancer(s). The described procedure may be determined as a nucleation-induced, multiphase synthesis of carnallite, the different phases being as follows: 1) MgCl₂/KCl-solution, 2) solid KCl and 3) solid carnallite. The heat of the crystallization will improve the production economy.

An adequate amount of water per formula weight of carnallite was found to be less than 100 ml per formula weight (FW) of carnallite, such as about 80-90 ml or less, to keep the suspension dilute enough and to provide for free mobility for the hydrated ions and the nucleation particles.

### The nucleation enhancers

All of the solvent-based crystallization systems needs two basic elements to take place: A saturated solution and the formation of crystallization germs *i.e.,* nuclei in the solution. In organic chemistry and also in a case of inorganic salts like alkalic chlorides, many types of particles, such as glass scraped from the walls of a beaker, work as nuclei and micro crystals are formed to start the actual crystal-formation.

The situation is more complicated in the present case of crystallizing strongly hydrated ions into binary salts including structural crystal water.

As described previously, the presence of OH-functional, water-insoluble particles will promote the crystallization of carnallite, however, in highly concentrated conditions. As the found materials are known as water-insoluble substances, it is expected that the materials are even less soluble into concentrated salt solutions. These materials can be classified as weakly acid, neutral or weakly basic on the same basis as for example some chromatographic materials like alumina, Al₂O₃. The following powder-form materials were found to be promising nucleation enhancers given in order of increasing surface acidity: Magnesium hydroxy carbonate according to the following formula xMgCO₃·yMg(OH)₂·zH₂O in its various forms, such as 4MgCO₃·Mg(OH)₂·5H₂O, amorphous magnesium silicate, mixed magnesium hydro silicates, precipitated silica i.e. hydrated silica and the respective. In some commercial magnesium hydroxy carbonate products of the formula xMgCO₃·yMg(OH)₂·zH₂O x,y and z may have even decimal values.

All the named substances have an effect on the nucleation, but in a slightly different way. Weakly acid materials have a faint tendency to form clusters of medium-sized carnallite crystals. On the other hand, weakly basic materials give rise to a smooth crystallization with smaller crystal size but need careful drying. The nucleation enhancers can be used individually or as combinations to reach the optimal properties for the produced carnallite. An adequate amount of the nucleation enhancer is in the range of 500 to 1000 mg, typically 400-800 mg per formula weight of carnallite in grams (FW 277.86). The optimal proportion is related to the formula weight of the additive.

### Conditions for the evaporation and drying

As described before, the preparation of carnallite in low temperatures yields glassy transparent lumps of the material. If crystalline products are wanted, the temperature shall be higher for the reason that the strongly hydrated Mg-ions need harder conditions to exhaust the bound water for the ion-pair formation. Usually, the mixture will be overheated for thermodynamic reasons and the temperature will raise to about 110°C and over. It is well known that carnallite and magnesium chloride may suffer from thermal treatments to produce small amounts of hydrogen chloride and, as a result, the taste and other properties of the material will be distorted.

In the described process, the evaporation may be performed in remarkably lower temperatures to avoid the structural changes of the carnallite. The temperature range of 40-90°C or 40-70°C, and even 40-60°C or 50-60°C will be adequate to remove completely the water phase.

As described before, the ionically bound water will be released upon the enhanced crystallization and will be readily removed to yield the wanted moist crystal mass of carnallite for further treatments. The obtained carnallite may contain moisture in the range of 8-12% by weight or below, such as 1-8% by weight.

In a case that the dry form of carnallite is preferred, the drying shall be performed under mild conditions, which means less than 50°C, such as 40°C, for example 30-40°C. At the higher temperatures, the formed carnallite may re-dissolve into the residual water, which may give rise to caking. The drying will be facilitated using diminished pressure. The dry carnallite can be characterized by microscopic and crystallographic methods.

The carnallite of food grade has carnallite content in the range of 99.5 - 99.9% by dry weight and a crystal size in the range of 0.3 - 0.8 mm.

### Processing of the edible salt blends

The present description comprises an improved method of blending carnallite of small crystal size in moist form with dry, edible alkalic chlorides to obtain a homogenous smooth, semi-dry blend. The alkalic chlorides are potassium and sodium chlorides in a ratio, which will match the present daily recommendations for the intake of essential electrolytes. The added salts have an adequate specific surface to adsorb the residual water and a homogenous, semi-dry triple salt blend will be formed. In the described circumstances, carnallite crystals will be encapsulated with alkalic chlorides, particularly when dried for example in a rotating drum-dryer. The encapsulation will improve the stability of the products in humid atmospheric conditions. The drying temperature of the blend will be around the same temperature as in the case of carnallite *i.e.,* not exceeding 40°C to avoid caking. However, if caking will be found, the loose agglomerates will be easily dispersed. Preferably diminished pressure will be facilitated.

The thus obtained mineral salt product has improved stability against humidity compared to corresponding products produced by conventional methods.

When calculating the favourable proportions of the salt blend, the following physiological facts shall be noted. Doses of magnesium on a daily basis shall not exceed amounts of over 200-300 mg to avoid a possible cumulative overdose, which are harmless but may give rise to loose stool. Although potassium is highly important electrolyte for the nervous functions and growth of muscles, individuals with renal failure are prone to suffer from complications like slight cramps. Also, in a case that the individual diet contains sodium salts of carboxylic acids, for example sodium acetate, the sodium will be substituted for potassium, and muscular dysfunctions may be noticed, even in cardiac level as a form of arrhythmia. For this reason, the content of free potassium chloride should be limited not to exceed 25% by weight of the total salts of the blend. Carnallite contains potassium chloride in bound form.

In one practical embodiment, the salt preparation consists of 50-70% by weight of sodium chloride, 10-45% by weight of carnallite and 5-20% by weight of free potassium chloride. In another practical embodiment, the salt preparation consists of 50-70% by weight of sodium chloride, 5-50% by weight of carnallite and 0-25% by weight of free potassium chloride.

In another embodiment the food grade salt preparation contains edible salts as follows, not restricting the possible applications of the novel carnallite:

| | |
|---|---|
| Sodium chloride | 50% |
| Potassium chloride (free) | 22% |
| Carnallite (bound KCl 7.5%) | 28% |

The novel carnallite preparation and the edible blends thereof can be characterized by microscopic methods and/or by routine chemical analyses, such as X-ray diffraction methods, which can be used to characterize the crystal structures. The cumulative analytical data will be of benefit when characterizing the corresponding products and evaluating the production methods thereof.

### Applications of the salt products

It is estimated, that about 57% of the population in USA does not meet the dietary recommendations for daily magnesium intake. In addition, there are several medical or metabolic conditions, which are connected to magnesium deficiency. There is also a list of medications, which are associated to the same condition.

Thus, the food grade carnallite and salt blends thereof may have extensive applications for nutraceutical and dietary supplementary applications, as well as for pharmaceutical purposes in the conditions of long-term magnesium deficiency. Aware of the fact that the food industry may be quite conservative in changing their production lines, the main target for the present food salts will be for the domestic use, small industrial kitchens and various institutional kitchens.

The final salt product may contain a physiologically acceptable amount of iodine in a form of potassium iodide according to the local regulations, which may vary for example in the range of 8-60 mg per kg of salt blend. The deficiency of iodine in foods is a global concern particularly in the foodstuffs produced in highlands.

The present salt products, pure carnallite and the blends thereof, have two particular properties, which may be of benefit in food production. The present salt products have a tendency to bind water, which property may be useful in meat industry, especially in the production of sausages and ham. In sausages, the water-binding property is important to keep the products in rigid form. A subjective trial concerning the snack-sausages was performed by our company and the results were found to be mostly positive.

Another useful property of the present salts is the slightly higher acidity, which may provide extended preservation properties e.g. for salted fish and ham.

A separate group of edible products needing moisture retaining properties are the bakery products and particularly bread products. At least in Finland, there are increasing amounts of breads in the market having extended shelf-life with no signs of excessive drying. One reason for this property of breads may arise from the polyphosphates added to the flours as anti-caking agents. The same material improves the properties of the dough and works in the ready-baked bread as a moisture retainer.

In connection to the former, the FDA has been active in recent years to restrict the multipurpose and vast industrial use of sodium triphosphate (STP or STPP) at a global level to retard or even prevent the eutrophication (algae based pollution) of the fresh-water reservoirs all over the world. At the physiological level, STP is readily absorbed and may give raise to elevated phosphate levels of serum, which in turn have been identified as a predictor of cardiovascular events and even mortality. Both polyphosphates are used as preservatives for seafood, poultry, meats and animal feeds. STPP is identified in food production as E451. In foods, STPP is used as an emulsifier and to retain moisture. Many governments regulate the quantities allowed in foods, as the material can substantially increase the sale weight of meat and fish products. In dry form STP and STPP contain six crystal-water molecules and they are thus comparable with carnallite and the blends thereof. The benefit of carnallite however is its slight acidity compared to sodium triphosphate, which yields slightly basic solutions.

All species of ruminants, cattle in particular, need supplementary magnesium feeding to avoid the pasture tetany during the grazing period. As alternative to the generally used, slightly basic magnesium oxide, blends of carnallite with NaCl would provide a versatile alternative having an attractive salty taste. The salts shall be protected against humidity by blending with another attractive material(s), which could be compressed into block-form to provide easily available lick-objects.

In the former text we have treated closely the topics connected to the main food products like meat, fish, and bread. The present food grade salt products may be further provided in a product selected from a group consisting of bakery products in common, poultry, seafood in common, cheese, butter, yogurt, sausages in common, snacks, canned vegetables and foods, beverages, mouthwashes, and geriatric supplements not restricting anyway the field of applications of the present salt products.

The food grade salt compositions may contain one or more of flavours, spices, vitamins, minerals, trace elements and flavour enhancers.

The following examples will describe further the procedures according to the invention.

### Examples

### Example 1

20.3 g of purified magnesium chloride hydrate (0.1 mole) was dissolved into 8.0 ml of water in a beaker of 400ml. 7.83 g of potassium chloride (0.105 mole) was added and the dispersion was stirred slowly on a magnetic heat plate in a temperature of 55°C. No nucleation enhancers were added. The water phase was evaporated to form a moist glassy transparent residue of carnallite. The residue was crushed into coarse crystal mass and was dried in a temperature of ca. 40°C for further evaluations.

### Example 2

20.3 g of magnesium chloride hydrate (0.1 mole) was dissolved into 8.0 ml of water in a beaker of 400ml. 7.83 g (0.105 mole) of KCl and 50 mg of MgCO₃·Mg(OH)₂ were added and the dispersion was stirred slowly on a magnetic heat plate in a temperature of about 50°C. Within minutes, small-sized crystals of carnallite were formed to turn the dispersion increasingly into a white suspension of crystals. As the crystallization was proceeding, the released free water was easily evaporated. The residual small-sized carnallite cake was treated mechanically to turn it into loose form. 22.0 g of KCl and 50.0 g of NaCl were added and the blend was carefully homogenized. The slightly moist salt blend was dried carefully as before for further evaluations.

### Example 3

20.3 g of magnesium chloride hydrate (0.1 mole) was dissolved into 8.0 ml of water in a beaker of 400ml, 7.83 g (0.105 mole) of potassium chloride was added together with 65 mg of magnesium hydroxy carbonate hydrate of formula Mg(CO₃)₄·Mg(OH)₂·5H₂O. The dispersion behaved in the same way as in example No 2. The bound water was released along the crystallization and was easily evaporated in low thermal treatment. The slightly moist product was allowed to cool and 22 g of potassium chloride and 50 g of NaCl were added. The homogenized blend was dried carefully to obtain a freely flowing material.

### Example 4

20.3 g of magnesium chloride hydrate (0.1 mole) was dissolved into 8.0 ml of water in a beaker of 400ml. 7.83 g (0.105 mole) of potassium chloride and 40 mg of precipitated silica were added. The dispersion was mixed under warming to reach the temperature range of 50-55°C. The carnallite started soon to crystallize and formed partially small agglomerates, which were mostly dispersed during the process. The water phase was soon evaporated to obtain middle-sized carnallite, which was blended with alkaline chlorides as before. The properties of the dried blend were excellent.

### Example 5

20.6 g of magnesium chloride hydrate (0.2 mole) was dissolved into 17 ml of water in a beaker of 400ml. 15.7 g (0.21 mole) of potassium chloride and 80 mg of magnesium hydrogen carbonate was added. The dispersion was mixed slowly to reach the temperature of 50°C. The carnallite was crystallized in the similar way as before and the free water was evaporated. The moist carnallite was blended with 44 g of potassium chloride and 100 g of sodium chloride. The blend was homogenized and transferred into a 1000 ml round-bottom flask. The blend was dried in reduced pressure over a water bath of ca. 40°C assisted by a rotary evaporator.

## Claims

1. A method of producing pure carnallite of food-grade, **characterized by** the gradual evaporation of a mixture of an equivalent or over-equivalent amount of potassium chloride dispersed into an equivalent amount of concentrated magnesium chloride solution in the presence of at least one nucleation enhancer, the mixture being warmed and agitated to convert the materials into a dispersion of carnallite, the residual water being evaporated and optionally the moist carnallite being dried to obtain the food-grade carnallite.

2. The method according to claim 1, wherein the nucleation enhancer comprises at least one of the following materials in powder form: Magnesium hydrogen carbonate, magnesium hydroxy carbonate in its various forms according to the following formula xMgCOs ·yMg(OH)₂·zH₂O, amorphous magnesium silicate, mixed magnesium hydro silicates, precipitated silica and the respective.

3. The method according to claim 1 or claim 2, wherein the required amount of water to accomplish the crystallization is less than 100 ml per formula weight (FW) of carnallite, preferably 80 - 90 ml or less.

4. The method according to any of claims 1-3 wherein the amount of the nucleation enhancer(s) is 400 - 800 mg per FW of carnallite (277.86 g).

5. The method according to claim any of claims 1-4, wherein the evaporation is carried out within the temperature range of 40 - 90°C, preferably 50 - 60°C or less.

6. Carnallite of food grade, which has carnallite content in the range of 99.5 - 99.9% by dry weight and a crystal size in the range of 0.3 - 0.8 mm.

7. A food grade salt product, comprising of pure carnallite, produced according to any of claims 1 - 5, **characterized by** contacting carnallite in a dry or moist form with alkaline chlorides to form a physiological food-salt blend, allowing the blend to stabilize by inter-crystalline ionic exchange, the blend being dried, to form the food grade salt product.

8. The food grade salt product of claim 7, comprising the following materials by dry weight: carnallite in the range of 5 - 50% by weight, potassium chloride in the range of 0 - 25% by weight and sodium chloride in the range of 50 - 70% by weight.

9. The food grade salt product of claim 8, comprising 28% by weight of carnallite, 22% by weight of potassium chloride and 50% by weight of sodium chloride.

10. The food grade salt product of any of the claims 7 - 9, wherein the salt contains one or more of the flavours, spices, vitamins, minerals, trace elements, and flavour enhancers.

11. The food grade salt product of any of the claims 7 - 10, wherein the product is a nutraceutical product, a dietary supplement product or a pharmaceutical product.

12. Use of the food grade salt product of any of the claims 7-11 in a product selected from the group consisting of bakery products, meats, poultry, seafood, cheese, butter, yoghurt, sausages, canned vegetables, beverages, mouthwash, pet supplements and geriatric supplements.

13. Use of the food grade salt product of any of the claims 7-11 as a substitute for the phosphates used in the meat industry.

14. Use of the carnallite of claim 6 in a food grade salt product with at least one alkaline chloride.
